**Europäisches Patentamt**

(19) **European Patent Office**

**Office européen des brevets**

(11) Veröffentlichungsnummer: **0 015 307**
**B1**

(12) **EUROPÄISCHE PATENTSCHRIFT**

(45) Veröffentlichungstag der Patentschrift:
01.12.82

(21) Anmeldenummer: 79104004.1

(22) Anmeldetag: 17.10.79

(51) Int. Cl.³: **G 06 K 1/12,** G 06 K 7/14,
G 06 K 19/08

(54) Einrichtung zur bargeldlosen Bezahlung von Waren oder Dienstleistungen.

(30) Priorität: 31.01.79 CH 928/79

(43) Veröffentlichungstag der Anmeldung:
17.09.80 Patentblatt 80/19

(45) Bekanntmachung des Hinweises auf die Patenterteilung:
01.12.82 Patentblatt 82/48

(84) Benannte Vertragsstaaten:
AT BE DE FR GB IT SE

(56) Entgegenhaltungen:
DE-A-2 451 939
FR-A-2 395 549
US-A-4 108 367

(73) Patentinhaber: LGZ LANDIS & GYR ZUG AG,
Konzern-Patentabteilung, CH-6301 Zug (CH)

(72) Erfinder: Schmidhauser, Rolf, Lindenstrasse 22,
CH-6330 Cham (CH)

(74) Vertreter: Müller, Hans-Jürgen, Dipl.-Ing.,
Lucile-Grahn-Strasse 38/II, D-8000 München 80 (DE)

Einrichtung zur bargeldlosen Bezahlung von Waren oder Dienstleistungen

Es ist eine Einrichtung der im Oberbegriff des Anspruchs 1 genannten Art bekannt (CH-PS Nr. 574144), bei der gleiche oder unterschiedliche optische Markierungen auf dem Zahlungsmittel in mehreren parallelen Spuren und im Abstand voneinander angeordnet sind. Eine dort nicht näher beschriebene Transporteinrichtung bewegt das Zahlungsmittel an einem Lesekopf und einem Löschkopf vorbei. Die Transporteinrichtung wird gestoppt, sobald sich eine gültige Markierung unter dem Lesekopf befindet, und das Zahlungsmittel wird um eine Werteinheit entwertet, indem die betreffende Markierung gelöscht wird. Die Anordnung der Markierungen im Abstand voneinander hat den Nachteil, dass durch die Zwischenräume zwischen den einzelnen Markierungen Speicherfläche verloren geht, und somit die an sich vorhandene Speicherkapazität schlecht ausgenützt wird.

Es wäre denkbar, die Markierungen lückenlos aneinanderzureihen und eine Kante oder eine gesonderte Startmarkierung des Zahlungsmittels als Ortsreferenz zum Aufsuchen der Löschposition heranzuziehen. Dies bedingt jedoch eine mechanisch aufwendige Transporteinrichtung, die spielfrei arbeiten und Schritte definierter Länge ausführen muss, um Fehlpositionierungen und damit Fehlentwertungen zu vermeiden. Bei durch Wärmeeinfluss u.dgl. geschrumpftem Zahlungsmittel können Fehlpositionierungen dennoch auftreten.

Schliesslich wäre es möglich, eine gesonderte Taktspur vorzusehen, deren Taktmarkierungen als Ortsreferenz zum Aufsuchen der Löschposition dienen. Dies erfordert jedoch zusätzlichen Platz auf dem Zahlungsmittel, erschwert und verteuert dessen Herstellung und bedingt zum Abtasten der Taktmarkierungen einen zweiten Lesekopf einschliesslich der zugehörigen elektronischen Detektionsglieder.

Aus der Patentanmeldung FR-A Nr. 2395549 ist eine Einrichtung bekannt, bei der in einer gesonderten Taktspur mindestens drei Arten unterschiedlicher Markierungen zyklisch und lückenlos aufeinanderfolgen, wobei der Lesekopf mindestens drei Lichtfühler aufweist, von denen jeder auf eine der Markierungsarten anspricht und wobei eine Leseeinrichtung zum Abtasten des Feldübergangs zwischen aufeinanderfolgenden Markierungen eingerichtet ist.

Der im Anspruch 1 angegebenen Erfindung liegt die Aufgabe zugrunde, die zur Verfügung stehende Speicherfläche optimal auszunutzen, auf eine gesonderte Taktspur zu verzichten, und ohne besondere Anforderungen an die Transporteinrichtung ein fehlerfreies Aufsuchen der Löschposition zu gewährleisten.

Nachfolgend wird ein Ausführungsbeispiel der Erfindung anhand der Zeichnung näher erläutert.

Es zeigen:
Fig. 1 ein Zahlungsmittel,
Fig. 2 ein Blockschaltbild, und
Fig. 3 ein Funktionsdiagramm.

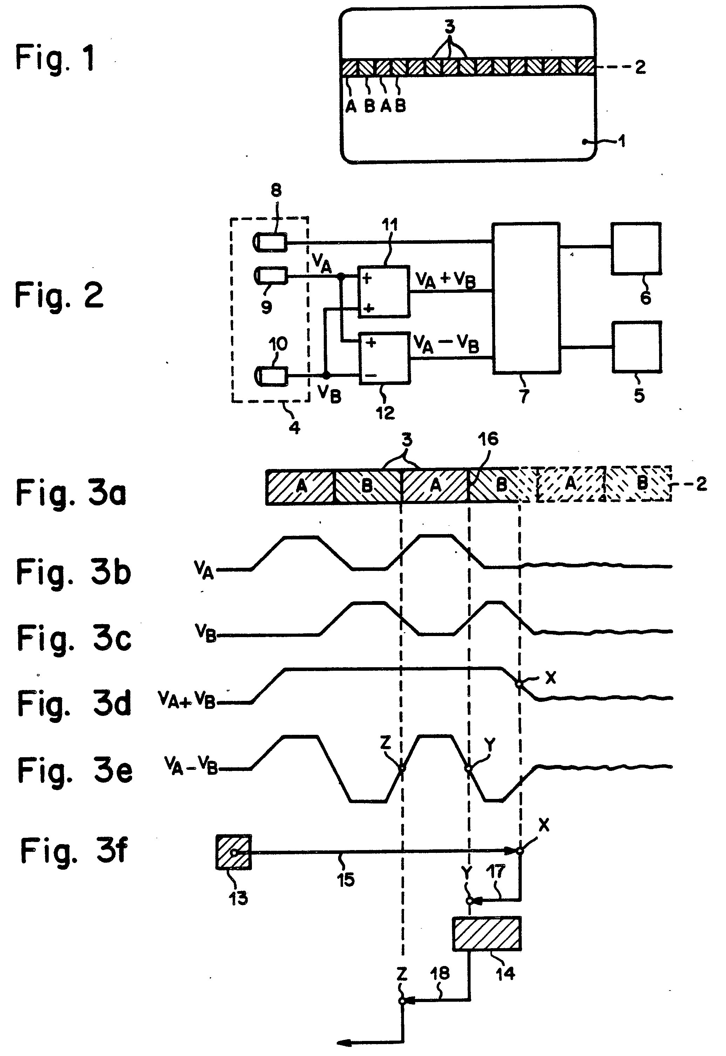

In der Fig. 1 bedeutet 1 ein kartenförmiges Zahlungsmittel, auf dem entlang einer Spur 2 eine Vielzahl gleicher Werteinheiten in Form optischer Markierungen 3 aufgezeichnet sind. Die Markierungen 3 bewirken eine vorbestimmte Modifikation einfallenden Lichtes durch Beugung oder Brechung der reflektierten oder transmittierten Strahlung, können z.B. Hologramme, Beugungsgitter oder Kinoforms sein und stellen demnach eine schwer fälschbare Echtheitsinformation dar. Im dargestellten Beispiel sind n = 2 Arten A und B unterschiedlicher Markierungen 3 vorhanden, die in der Spur 2 zyklisch und lückenlos aufeinanderfolgen.

Beim Gebrauch des Zahlungsmittels 1 in einer Einrichtung zur bargeldlosen Bezahlung von Waren oder Dienstleistungen wird dieses in ein Lese- und Entwertegerät eingeführt, in welchem die Markierungen 3 auf Echtheit geprüft und entsprechend dem zu bezahlenden Betrag eine Anzahl Markierungen 3 schrittweise entwertet werden.

Das Lese- und Entwertegerät besteht gemäss der Fig. 2 im wesentlichen aus einem Lesekopf 4, einem Löschkopf 5, einer Transporteinrichtung 6 zur Erzeugung einer Relativbewegung zwischen dem Zahlungsmittel 1 einerseits und dem Lesekopf 4 sowie dem Löschkopf 5 andererseits und aus einer Steuereinrichtung 7 zur Steuerung der Transporteinrichtung 6, zur Auswertung der Signale des Lesekopfes 4 und zur Steuerung des Löschkopfes 5.

Der Lesekopf 4 enthält eine Lichtquelle 8, die einen Leselichtstrahl auf den unter dem Lesekopf 4 liegenden Bereich der Spur 2 wirft. Ferner enthält der Lesekopf n, im beschriebenen Beispiel also zwei Lichtfühler 9, 10, von denen jeder auf eine der Markierungsarten A, B anspricht. Der Lichtfühler 9 erzeugt ein elektrisches Signal $V_A$ und der Lichtfühler 10 ein elektrisches Signal $V_B$. Beide Lichtfühler 9, 10 sind an ein Summierglied 11 und an ein Differenzglied 12 angeschlossen, welche das Summensignal $V_A + V_B$ und das Differenzsignal $V_A - V_B$ bilden. Ist n > 2, so sind mehrere Differenzglieder erforderlich, wobei jeweils zwei, aufeinanderfolgenden Markierungen 3 zugeordnete Lichtfühler an ein Differenzglied und alle n Lichtfühler an das Summierglied 11 anzuschliessen sind.

In der Fig. 3 ist die Spur 2 mit den Markierungen 3 der Arten A und B nochmals vergrössert dargestellt. Die gestrichelt gezeichneten Markierungen 3 am in der Zeichnung rechts liegenden Ende der Spur 2 sind bereits gelöscht. Die Fig. 3b zeigt das Signal $V_A$, die Fig. 3c das Signal $V_B$, die Fig. 3d das Summensignal $V_A + V_B$ und die Fig. 3e das Differenzsignal $V_A - V_B$. In der Fig. 3f ist der Bewegungsablauf zeichnerisch dargestellt, wobei die optisch wirksame Fläche des in einer Ausgangsposition befindlichen Lesekopfes 4 mit 13, und die wirksame Fläche des in einer Löschposition befindlichen Löschkopfes 5 mit 14 bezeichnet ist.

Nach Einführung des Zahlungsmittels 1 in das Lese- und Entwertegerät setzt die Steuereinrichtung 7 die Transporteinrichtung 6 in Betrieb. Der Lesekopf 4 wandert in Pfeilrichtung 15, in der Zeichnung von links nach rechts, der Spur 2 entlang. An den Lichtfühlern 9, 10 entstehen die impulsförmigen Signale $V_A$ und $V_B$, deren Anstiegs- und Abfallflanken infolge der endlichen Breite der Fläche 13 verhältnismässig flach verlaufen. Das Summensignal $V_A + V_B$ ist annähernd konstant und fällt auf null, wenn der Lesekopf 4 die ungelöschten Markierungen 3 verlässt und zu den gelöschten Markierungen gelangt. Jeder Nulldurchgang des Differenzsignals $V_A - V_B$ markiert einen Feldübergang 16 zwischen zwei aufeinanderfolgenden Markierungen 3. Durch Zählen dieser Nulldurchgänge in einem Zähler der Steuereinrichtung 7 wird die Anzahl ungelöschter Feldübergänge und damit die Anzahl gültiger Werteinheiten registriert.

Sobald das Summensignal $V_A + V_B$ im Punkt X einen vorbestimmten Pegel unterschreitet, schaltet die Steuereinrichtung 7 die Laufrichtung der Transporteinrichtung 6 um. Der Lesekopf 4 bewegt sich jetzt in Pfeilrichtung 17, also in entgegengesetzter Laufrichtung, zum Punkt Y, der mit dem ersten ungelöschten Feldübergang 16 und somit mit dem ersten Nulldurchgang des Differenzsignals $V_A - V_B$ zusammenfällt. Im Punkt Y schaltet die Steuereinrichtung 7 die Transporteinrichtung 6 aus und setzt den Löschkopf 5 in Betrieb. Der Löschkopf 5 befindet sich hierbei an einem durch den ersten nicht gelöschten Feldübergang 16 definierten Ort der Spur 2 und ist so justiert, dass dieser Feldübergang gelöscht wird. Das Löschen kann durch thermische Einwirkung oder auf eine andere bekannte Weise erfolgen. Nach erfolgter Löschung wird die Transporteinrichtung 6 wieder eingeschaltet und der Lesekopf 4 wandert in Pfeilrichtung 18 zum Punkt Z oder in die Ausgangsposition zurück, je nachdem, ob das Zahlungsmittel 1 um eine weitere Werteinheit entwertet werden soll oder nicht.

Die Vorteile der Erfindung lassen sich nun leicht erkennen. Da die Markierungen 3 in der Spur 2 lückenlos aneinandergereiht sind, kann die zur Verfügung stehende Speicherfläche restlos ausgenutzt werden. Obwohl keine gesonderte Taktspur erforderlich ist, erfolgt die Positionierung des Löschkopfes 5 aufgrund einer Taktinformation, die durch die Feldübergänge 16 der zyklisch aufeinanderfolgenden unterschiedlichen Markierungsarten A, B in die Spur 2 eingegeben ist. Dadurch ist ein fehlerfreies Aufsuchen der Löschposition auch dann gewährleistet, wenn das Zahlungsmittel 1 beispielsweise durch Wärmeeinfluss Längenänderungen erfährt. Die hohe Positionierungsgenauigkeit gestattet, die Abmessungen der Markierungen 3 im Vergleich zu bekannten Lösungen kleiner zu wählen und somit eine höhere Speicherdichte zu erzielen. Die Länge der Schritte der Transporteinrichtung 6 ist nicht durch diese selbst, sondern durch die Länge der Markierungen 3 gegeben, so dass die Transporteinrichtung aus sehr einfachen Mitteln aufgebaut sein kann.

Da der Löschkopf 5 jeweils nicht nur die letzte ungelöschte Markierung 3, sondern auch den angrenzenden Feldübergang 16 löscht, können allenfalls auftretende geringe Positionierungsfehler keine fehlerhafte Teillöschung einer Werteinheit verursachen. Vorteilhaft ist der Löschkopf 5 bezüglich des Feldübergangs 16 asymmetrisch justiert, so dass jeweils mehr als die Hälfte der an den ausgelöschten Feldübergang angrenzenden Markierung 3 erhalten bleibt und der nachfolgende Feldübergang zuverlässig abgetastet werden kann.

Es versteht sich, dass die Detektion der Feldübergänge 16 aufgrund des Differenzsignals $V_A - V_B$ besonders vorteilhaft ist, jedoch auch auf andere Weise erfolgen könnte. Das Abtasten der Feldübergänge 16 auf dem Hinweg und die Entwertung auf dem Rückweg ermöglicht, den Restwert des Zahlungsmittels 1 vor dessen weiterer Entwertung auf einfachste Weise zu bestimmen.

Parallel zur Spur 2 können weitere Spuren mit optischen Markierungen angeordnet werden. Die Markierungen dieser weiteren Spuren können alle gleicher Art sein, beispielsweise der Art A, wobei das Aufsuchen der Löschposition aufgrund der durch die Feldübergänge 16 der Spur 2 gegebenen Taktinformation dienen kann. Zum Löschen der Markierungen der weiteren Spuren kann der Löschkopf 5 dienen, der dann als Mehrspurlöschkopf oder als senkrecht zur Richtung der Spuren verschiebbarer Löschkopf auszubilden ist.

## Patentansprüche

1. Einrichtung zur bargeldlosen Bezahlung von Waren oder Dienstleistungen, mit einem Zahlungsmittel (1), auf dem eine Vielzahl gleicher Werteinheiten in Form von in mindestens einer Spur (2) hintereinander angeordneten optischen Markierungen (3) unterschiedlicher Art aufgezeichnet sind, die eine vorbestimmte Modifikation einfallenden Lichtes hervorrufen, mit einer Leseeinrichtung, die einen aus einer Lichtquelle (8) und mindestens einem Lichtfühler (9, 10) bestehenden Lesekopf (4) zum Abtasten der Markierungen aufweist, mit einem Löschkopf (5) zum schrittweisen Entwerten des Zahlungsmittels (1) durch Löschen von Markierungen entsprechend dem zu bezahlenden Betrag, mit einer Transporteinrichtung (6) zur Erzeugung einer Relativbewegung zwischen dem Zahlungsmittel (1) einerseits und dem Lesekopf (4) sowie dem Löschkopf (5) andererseits, und mit einer Steuereinrichtung (7) zur Steuerung der Transporteinrichtung (6), zur Auswertung der Signale des Lesekopfes und zur Steuerung des Löschkopfes, dadurch gekennzeichnet, dass in der Spur (2) bzw. in mindestens einer der Spuren $n \geqslant 2$ Arten (A, B) unterschiedlicher Markierungen (3) zyklisch und lückenlos aufeinanderfolgen, dass der Lesekopf (4) mindestens n Lichtfühler (9, 10) aufweist, von denen jeder auf eine der Markierungsarten (A, B) anspricht, dass die Leseeinrichtung (4, 12) zum Abtasten des Feldübergangs (16) zwischen aufeinanderfolgenden Markierungen eingerichtet ist, dass die Steuereinrichtung (7) die Transporteinrichtung (6) ausschaltet und den Löschkopf (5) in Betrieb setzt, wenn sich dieser an einem durch einen Feldübergang (16) definierten Ort der Spur (2) befindet, und dass der Löschkopf (5) so justiert ist, dass jeweils ein Feldübergang (16) gelöscht wird.

2. Einrichtung nach Anspruch 1, dadurch gekennzeichnet, dass die Transporteinrichtung (6) von der Steuereinrichtung (7) so gesteuert ist, dass in der einen Laufrichtung (15) sämtliche ungelöschten Feldübergänge (16) abgetastet und mittels eines Zählers gezählt werden und danach in entgegengesetzter Transportrichtung (17, 18) eine oder mehrere Feldübergänge (16) abgetastet und gelöscht werden.

3. Einrichtung nach Anspruch 2, dadurch gekennzeichnet, dass jeweils zwei, aufeinanderfolgenden Markierungen (3) zugeordnete Lichtfühler (9, 10) an ein Differenzglied (12) und die n Lichtfühler (9, 10) an ein Summierglied (11) angeschlossen sind, dass die Steuereinrichtung (7) die Laufrichtung (15) der Transporteinrichtung (6) umschaltet, wenn das Ausgangssignal ($V_A + V_B$) des Summiergliedes (11) einen vorbestimmten Pegel unterschreitet, und dass die Steuereinrichtung (7) die Transporteinrichtung (6) ausschaltet und den Löschkopf (5) in Betrieb setzt, wenn das Ausgangssignal ($V_A - V_B$) des Differenzgliedes (12) durch null läuft.

## Claims

1. Apparatus for the cashless payment of articles or services, comprising a payment means (1) on which a plurality of equal units of value are recorded in the form of optical markings (3) of different kinds, which are arranged successively in at least one track (2), said markings causing a predetermined modification of incident light, a reading means having a reading head (4) comprising a light source (8) and at least one light sensor (9, 10), for scanning the markings, a cancelling head (6) for stepwise reduction in the value of the payment means (1) by cancellation of markings according to the amount to be paid, a conveyor means (6) for producing a relative movement between the payment means (1) on the one hand and the reading head (4) and the cancelling head (5) on the other hand, and a control means (7) for controlling the conveyor means (6), for evaluating the signals of the reading head and for controlling the cancelling head, characterized in that n ≥ 2 kinds (A, B) of different markings (3) are disposed in succession cyclically and without gaps in the track (2) or in at least one of the tracks, that the reading head (4) has at least n light sensors (9, 10), each of which responds to one of the kinds (A, B) of marking, that the reading means (4, 12) is arranged for scanning the field transition (16) between successive markings, that the control means (7) cuts out the conveyor means (6) and sets the cancelling head (5) in operation when the cancelling head is at a location on the track (2) which is defined by a field transition (16), and that the cancelling head (5) is so adjusted as to cancel a respective field transition (16).

2. Apparatus according to claim 1, characterized in that the conveyor means (6) is controlled by the control means (7) in such a way that all uncancelled field transitions (16) are scanned and counted by means of a counter in one direction of movement (15), and there upon one or more field transitions (16) are scanned and cancelled in the opposite conveying direction (17, 18).

3. Apparatus according to claim 2, characterized in that a respective pair of light sensors (9, 10) associated with successive markings (3) are connected to a differencing means (12) and the n light sensors (9, 10) are connected to a summing means (11), that the control means (7) switches over the direction of movement (15) of the conveyor means (6) when the output signal ($V_A + V_B$) of the summing means (11) is below a predetermined level, and that the control means (7) cuts out the conveyor means (6) and sets the cancelling head (5) in operation when the output signal ($V_A - V_B$) of the differencing means (12) passes through zero.

## Revendications

1. Système de paiement sans argent comptant pour marchandises ou services, comprenant un moyen de paiement (1) sur lequel un certain nombre d'unités de valeur identiques sont enregistrées sous forme de marques optiques de types différents disposées les unes à la suite des autres dans au moins une piste (2), qui déterminent une modification prédéterminée d'une lumière incidente, un dispositif de lecture qui présente une tête de lecture (4) destinée à palper les marques et qui est composé d'une source lumineuse (8) et d'au moins un capteur de lumière (9, 10), une tête d'effacement (5) destinée à oblitérer le moyen de paiement (1) par pas successifs, par effacement de marques en fonction du montant à payer, un dispositif de transport (6) destiné à produire un mouvement relatif entre le moyen de paiement (1), d'une part, et la tête de lecture (4) ainsi que la tête d'effacement (5), d'autre part, et un dispositif de commande (7) destiné à commander le dispositif de transport (6), à évaluer les signaux de la tête de lecture et à commander la tête d'effacement, caractérisé en ce que, dans la piste (2) ou dans au moins l'une des pistes, des marques (3) de n ≥ 2 types (A, B) se succèdent cycliquement et sans intervalle libre, en ce que la tête de lecture (4) présente au moins n capteurs de lumière (9, 10) dont chacun répond à l'un des types de marques (A, B), en ce que le dispositif de lecture (4, 12) est agencé pour détecter la transition de champ (16) entre les marques successives, en ce que le dispositif de commande (8) met le dispositif de transport (6) hors d'action et la tête d'effacement (5) en action lorsque celle-ci se trouve sur un emplacement de la piste (2) défini par une transition de champ (7), et en ce que la tête d'effacement (5) est réglée de manière qu'à chaque fois une transition de champ (16) soit effacée.

2. Système suivant la revendication 1, caractérisé en ce que le dispositif de transport (6) est commandé par le dispositif de commande (7) de telle manière que, dans un sens de déplacement (15), toutes les transitions de champ non effacées (16) soient détectées et comptées au moyen d'un compteur et qu'ensuite, dans le sens de transport opposé (17, 18), une ou plusieurs transitions de champ (16) soient détectées et effacées.

3. Système suivant la revendication 2, caractérisé en ce que les deux capteurs de lumière (9, 10) d'une paire de capteurs de lumière affectés à des marques (3) successives sont connectés à un organe de différence (12) et que les n capteurs de lumière (9, 10) sont connectés à un organe additionneur (11), en ce que le dispositif de commande (7) inverse le sens de déplacement (15) du dispositif de transport (6) lorsque le signal de sortie ($V_A + V_B$) de l'organe additionneur (11) devient inférieur à un niveau prédéterminé, et en ce que le dispositif de commande (7) met le dispositif de transport (6) hors d'action et met la tête d'effacement (5) en action lorsque le signal de sortie ($V_A + V_B$) de l'organe de différence (12) passe par zéro.

0 015 307

Fig. 1

Fig. 2

Fig. 3a

Fig. 3b

Fig. 3c

Fig. 3d

Fig. 3e

Fig. 3f